**Europäisches Patentamt**

**European Patent Office**

**Office européen des brevets**

(19)

(11) Veröffentlichungsnummer: **0 353 585**

**A2**

(12) ## EUROPÄISCHE PATENTANMELDUNG

(21) Anmeldenummer: **89113593.1**

(22) Anmeldetag: **24.07.89**

(51) Int. Cl.4: **G05B 19/18**

(30) Priorität: **04.08.88 DE 3826593**

(43) Veröffentlichungstag der Anmeldung:
**07.02.90 Patentblatt 90/06**

(84) Benannte Vertragsstaaten:
**DE FR IT NL SE**

(71) Anmelder: **Siemens Aktiengesellschaft**
**Wittelsbacherplatz 2**
**D-8000 München 2(DE)**

(72) Erfinder: **Gose, Horst, Dipl.-Ing.**
**Buckenhofer Weg 32**
**D-8520 Erlangen(DE)**

(54) **Verfahren zur Bahn- und Positionskorrektur eines Werkzeugs eines Roboters.**

(57) Bei einem Verfahren zur Bahn- und Positionskorrektur eines Werkzeugs (W) eines Roboters wird eine von der Soll-Position (P) um den Vektor $(\underline{X})$ abweichende Ist-Position (P´) an diskreten Punkten (P0 ...P4) im gesamten Arbeitsbereich des Roboters meßtechnisch erfaßt. Dabei werden nur soviele Punkte (P0...P4) vermessen, wie unter Ausnutzung der Symmetriebedingungen eines jeweiligen Bezugskoordinatensystems (X,Y,Z) notwendig sind. Die gemessenen Abweichungen $(\underline{X})$ werden als Elemente einer Positionsfehler-Raummatrix in einem Speichermedium, auf das die Robotersteuerung Zugriff hat, hinterlegt. Bei der Offline- oder Online-Berechnung einer jeweiligen Werkzeugposition werden alle Abweichungen $(\underline{X})$ im Arbeitsbereich des Roboters durch Interpolation der Abweichungen $(\underline{X})$ an den Meßpunkten (P0...P4) ermittelt und kompensatorisch bei der Einstellung der Robotergelenke berücksichtigt.

EP 0 353 585 A2

FIG 1

## Verfahren zur Bahn- und Positionskorrektur eines Werkzeugs eines Roboters

Die Erfindung bezieht sich auf ein Verfahren zur Bahn- und Positionskorrektur eines Werkzeugs eines Roboters, wobei die Soll-Position des Werkzeugs im Arbeitsbereich des Roboters in einem Bezugskoordinatensystem angebbar ist und wobei für eine jeweils vorgebbare Soll-Position des Werkzeugs entsprechende Winkelstellungen der Robotergelenke von einer Robotersteuerung berechnet und eingestellt werden.

Bei der Berechnung der Bahn oder der jeweiligen Position eines Roboterwerkzeugs sind komplexe Koordinatentransformations-Gleichungssysteme zu berücksichtigen. Dabei wird aus den jeweiligen Winkelstellungen der Robotergelenke und aus den Parametern, welche die Geometrie des Roboters beschreiben - wie beispielsweise die Abstände und Richtungen der Gelenkachsen -die jeweilige Position des Werkzeugs berechnet. Die Position, d.h. der Ort und die Orientierung des Werkzeugs, wird dabei auf ein Koordinatensystem bezogen, dessen Ursprung gewöhnlich im Fußpunkt des Roboters liegt. Umgekehrt lassen sich, um das Werkzeug auf eine bestimmte Position zu bringen, die entsprechenden Winkelstellungen für die Robotergelenke berechnen, wenn eine bestimmte Position bezüglich des Bezugskoordinatensystems und die Geometrie-Parameter vorgegeben werden.

In der deutschen Patentanmeldung P 37 14 806.0 "Verfahren zur Positionierung eines Werkzeugs eines mehrgelenkigen Roboters" ist bereits eine Fehlpositionskorrektur eines Roboterwerkzeugs bzw. einer Roboterhand vorgeschlagen. Die dort beschriebene Fehlpositionierung kommt jedoch daher, daß der vom Hersteller gelieferte Roboter nichtideale Geometrieverhältnisse aufweist.

Unabhängig davon ist ein realer Roboter aber auch durch nichtideale statische und dynamische Eigenschaften gekennzeichnet. Dadurch ergeben sich bei der Positionierung Abweichungen zwischen vorgebbarer Soll-Position und tatsächlich erreichter Ist-Position, die beispielsweise durch auf die elastischen Roboterarme einwirkenden Gravitationskräfte oder Ungenauigkeiten der Gelenkstellmotoren verursacht sein können. Die Vermeidung dieser Positionsfehler durch Modifikation der entsprechenden Parameter in den Koordinatentransformations-Gleichungssystemen würde eine äußerst aufwendige numerische Koordinatentransformation sowie einen sehr großen Rechenaufwand und damit lange Rechenzeiten erfordern.

Aufgabe der Erfindung ist es, mit möglichst geringem technischen Aufwand die Abweichungen zwischen Soll und Ist-Position bei der Positionierung eines Werkzeugs eines Roboters zu korrigieren.

Gemäß der Erfindung wird diese Aufgabe durch die folgenden Verfahrensschritte gelöst:

a) Während einer Einmeßphase wird die jeweilige Ist-Position des Werkzeugs bezüglich vorbestimmter Meßpunkte, die der Robotersteuerung als Soll-Positionen vorgebbar sind, innerhalb des Arbeitsbereichs des Roboters vermessen und die jeweilige Abweichung zwischen Ist- und Soll-Position wird als Element einer Positionsfehler-Raummatrix in einem Speichermedium hinterlegt, wobei lediglich so viele Meßpunkte gesetzt werden wie notwendig sind um die Positionsfehler-Raummatrix unter Ausnutzung der Symmetrieeigenschaften eines jeweiligen Bezugssystems zu bilden,

b) die Abweichungen zwischen Ist- und Soll-Position an den vorbestimmten Meßpunkten werden zur Interpolation der Abweichungen aller zwischen den Meßpunkten liegenden Werkzeugpositionen herangezogen und dienen damit auch einer kontinuierlichen Bahnfehlerkompensation,

c) aus den Abweichungen werden jeweils Korrekturwerte für die Winkelstellungen der Robotergelenke berechnet und zur Positionskorrektur des Werkzeugs herangezogen.

Mit der Positionskorrektur des Werkzeugs an jedem beliebigen Raumpunkt ist automatisch eine kontinuierliche Bahnfehlerkompensation einer vom Roboter abzufahrenden Bahnkurve gewährleistet, da sich diese aus inkrementellen Werkzeugpositionen zusammensetzt. Unter dem Begriff "Positionierung" soll also im folgenden auch das "Abfahren einer Bahnkurve" verstanden werden.

Für die Berechnung aller Positionsfehler innerhalb des Arbeitsbereichs des Roboters sind damit relativ wenig Meßpunkte und ein geringer Speicherplatz für die Positionsfehler-Raummatrix erforderlich. Die Anzahl der Meßpunkte sowie die Anzahl der erforderlichen Speicherplätze für die Elemente der Positionsfehler-Raummatrix lassen sich durch Ausnutzung der Symmetrieeigenschaften eines jeweiligen Bezugssystems erheblich verringern. Die zwischen den Meßpunkten durchzuführende Interpolation erfordert einen nicht zu hohen Rechenaufwand und relativ kurze Rechenzeiten.

Eine erste Ausbildung der Erfindung ist dadurch gekennzeichnet, daß die jeweilige Ist-Position des Werkzeugs in mehreren zur Rotationsachse des Roboters rechtwinkligen Ebenen bezüglich vorgebbarer Meßpunkte vermessen wird, wobei die vorgebbaren Meßpunkte auf einer Geraden einer jeweiligen Ebene liegen die durch die Rotationsachse und einen vorgebbaren Abstand des Werkzeugs von der Rotationsachse gebildet wird, wobei alle übrigen Meßpunkte einer jeweiligen Ebene unter Ausnutzung der Rotationssymmetrie bestimmt werden. Dadurch verkürzt sich einerseits der Aufwand für die Positionsfehler-Vermessung in erheblichen Maße, andererseits kann die Anzahl der Speicherplätze für die Positionsfehler-Raummatrix ebenfalls durch die sich einstellende Matrixsymmetrie reduziert werden.

Eine weitere Vereinfachung für das angegebene Verfahren ist dadurch gekennzeichnet, daß die Meßpunkte auf einer Geraden einer jeweiligen Ebene so gesetzt werden, daß die Abweichung von der Soll-Position zur Ist-Position jedes Meßpunktes gleich groß ist. Dadurch wird eine Reduzierung der Anzahl der Meßpunkte auf einer jeweiligen Geraden erreicht, da die Durchbiegung des Roboterarmes normalerweise in Richtung zur Rotationsachse des Roboters geringer sein wird und sich damit der Abstand der Meßpunkte bei gleicher Abweichung vergrößert.

Eine weitere Ausbildung der Erfindung sieht vor, den Abstand benachbarter Ebenen so zu wählen, daß die Differenz der Abweichungen zwischen den Ist- und Soll-Positionen einer Ebene und den Abweichungen zwischen den Ist- und Soll-Positionen einer benachbarten Ebene vorgebbare Werte einnehmen. Diese Ausbildung dar Erfindung bezieht sich auf die zweckmäßige Einteilung des zur jeweiligen Ebene senkrechten Abstands der Meßpunkte voneinander. Sinnvollerweise wird man nämlich erst dann die Positionsfehler in einer Ebene vermessen, wenn sie von den Positionsfehlern der vorhergehenden Ebene bedeutend abweichen, da in den dazwischenliegenden Ebenen in denen die Abweichungen gering sind zur Positionsfehlerkorrektur auf die Abweichungen der zuletzt vermessenen Ebene zurückgegriffen werden kann.

Eine weitere Ausbildung der Erfindung ist dadurch gekennzeichnet, daß die Abweichungen zwischen Ist- und Soll-Position an den vorbestimmten Meßpunkten unter verschiedenen Arbeitslasten des Roboters vermessen werden, da die Durchbiegung des Roboterarms aufgrund des Gravitationseinflusses gewöhnlich lastabhängig ist.

Wird der Roboter nur unter einer überschaubaren Anzahl verschiedener Lasten betrieben, so kann es zweckmäßig sein, für die jeweilige Last jeweils eine Positionsfehler-Raummatrix zu bilden. Für eine größere Anzahl von Lasten mit denen der Roboter beauf schlagt werden kann, sieht eine weitere Ausbildung der Erfindung vor, aus den unter den verschiedenen Arbeitslasten des Roboters erhaltenen Abweichungen eine allgemeine Lastabhängigkeit der Meßpunkte zu interpolieren, was sich durch einfache mathematische Beziehungen erreichen läßt.

Zur Durchführung der Positionsfehlerkorrektur ist eine Ausbildung der Erfindung geeignet, die dadurch gekennzeichnet ist, daß die lastabhängigen Abweichungen an den vorbestimmten Meßpunkten in einem Offline-Programmiergerät für die Robotersteuerung hinterlegbar sind und bei der Berechnung der Winkelstellungen der Robotergelenke für ein jeweils vorgegebenes Steuerprogramm fehlerkompensierend berücksichtigt werden. Der Robotersteuerung werden damit typ- und lastzeitspezifisch verzerrte Programme vorgegeben, die bei der Abarbeitung durch den realen Roboter zu den gewünschten Positionierergebnissen führen. Dieses Verfahren ist dort besonders angebracht, wo ein Roboter immer gleiche Bewegungsabläufe ausführt, oder da, wo die Bahnkurven des Roboters so kompliziert sind, daß eine Online-Positionsfehlerkorrektur trotz des einfachen Verfahrens zuviel Rechenzeit erfordern würde.

Sind die zuletzt genannten Bedingungen nicht gegeben, läßt sich die Positionsfehlerkorrektur gemäß dem Verfahren so durchführen, daß die Abweichungen an den vorbestimmten Meßpunkten in der jeweiligen Robotersteuerung hinterlegbar sind und im Online-Betrieb bei der Abarbeitung jedes Steuerprogramms zur fehlerkompensierenden Berechnung der Winkelstellungen der Robotergelenke herangezogen werden.

Ein Ausführungsbeispiel der Erfindung ist in der Zeichnung dargestellt und wird im folgenden näher erläutert. Dabei zeigen:

FIG 1 einen Roboterarm mit drei Gelenken und den ihn umgebenden Arbeitsbereich,

FIG 2 einen Werkzeugträger.

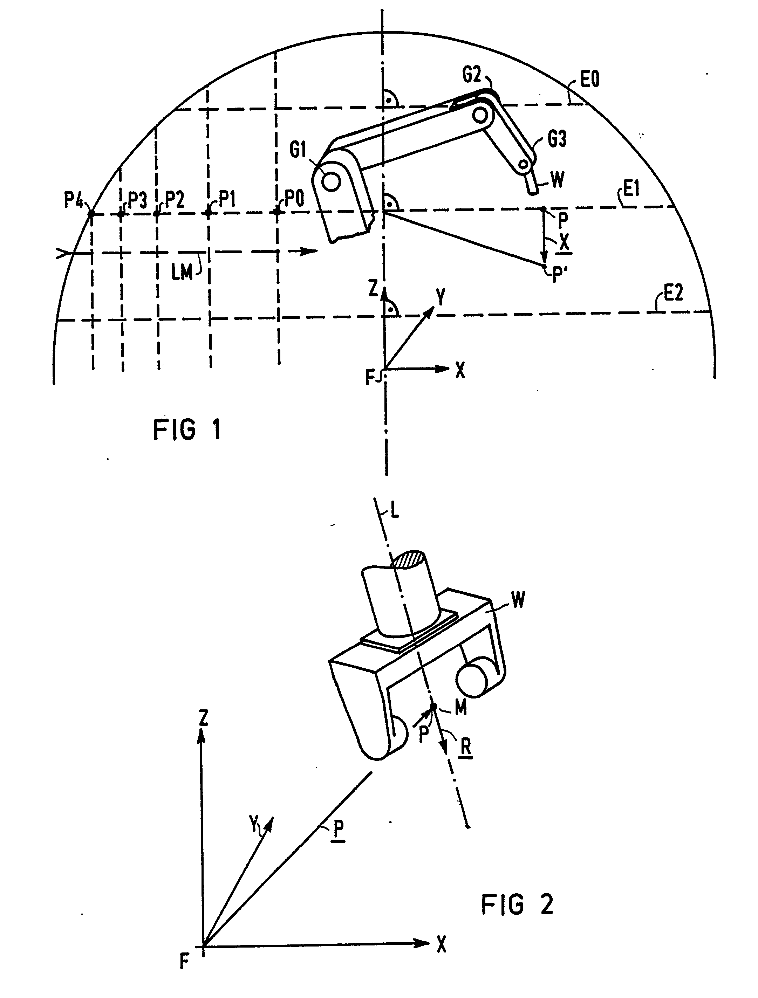

In FIG 1 ist von einem n-achsigen Roboter ein Roboterarmabschnitt mit drei rotatorischen Gelenken G1, G2, G3 dargestellt. Am Gelenk G3 ist als Handteil des Roboterarms ein Werkzeug W angedeutet, das im Zusammenhang mit FIG 2 vollständig dargestellt ist und auf das später noch eingegangen wird. Dort ist auch zu erkennen, daß der Mittelpunkt M des Werkzeugs W mit einem eingezeichneten Punkt P (FIG 1, FIG 2) zusammenfällt.

Ferner ist in FIG 1 ein kartesisches Koordinatensystem als Bezugskoordinatensystem dargestellt. Es liegt mit seinem Usprung $(X, Y, Z) = (0,0,0)$ im konstruktiv im einzelnen nicht gezeigten Fußpunkt F des Roboters. Es könnte sich aber auch an einer beliebigen anderen Stelle des Raumes befinden. Es sei angenommen, daß die Z-Achse mit der Rotationsachse des Roboters zusammenfällt.

Der Arbeitsbereich des Roboters sei hier als Halbkugelschale angenommen, deren halbkreisförmiger Querschnitt mit dem Mittelpunkt im Ursprung des Koordinatensystems dargestellt ist. Es sei angenommen, daß der Roboter sein Werkzeug W durch entsprechende Einstellungen der Gelenke G1, G2, G3 auf jeden beliebigen Raumpunkt der Halbkugelschale positionieren kann. Im einfachsten Fall läßt sich die Position des Werkzeugs W durch einen dreidimensionalen Vektor mit Komponenten in X-, Y-, Z-Richtung beschreiben. Normalerweise muß aber noch die Stellung des Werkzeugs W im Raum berücksichtigt werden, so daß sich insgesamt ein sechsdimensionaler Vektor ergibt. Dieser Sachverhalt läßt sich am besten in Zusammenhang mit FIG 2 erklären.

FIG 2 zeigt eine perspektivische Darstellung des Werkzeugs W. Die Orientierung des Werkzeugs W bezüglich des bereits aus FIG 1 bekannten Bezugskoordinatensystems kann durch den Vektor R, der mit der Längsachse L des Werkzeugs $\overline{W}$ zusammenfällt, beschrieben werden. Der Vektor $\underline{R}$ zeigt dabei in die Richtung, in welcher das Werkzeug W auf einen Gegenstand, z.B. auf ein Werkstück zugrei fen kann. Die Position des Werkzeugs, d.h. die Lage sowie die Orientierung des Werkzeugs W kann damit durch den Ortsvektor P, der den Mittelpunkt M des Werkzeugs W angibt, und durch den Vektor $\underline{R}$ der die Orientierung des Werkzeugs W angibt, beschrieben werden. Da beide Vektoren dreidimensional sind, ergibt sich insgesamt ein sechsdimensionaler Vektor der die Position des Werkzeugs W beschreibt. Nach dieser Darstellung wird wieder auf FIG 1 Bezug genommen.

Soll der Roboter sein Werkzeug W auf den Punkt P positionieren, so werden ihm die kartesischen Koordinaten dieses Punktes P zusammen mit dem Richtungsvektor für das Werkzeug W vorgegeben. Die Robotersteuerung berechnet sich dann aus den vorgegebenen Koordinaten entsprechende Winkelstellungen für die Gelenke G1, G2, G3 und stellt diese über die jeweiligen Gelenkstellmotoren ein. Unter idealen Bedingungen, würde der Roboter sein Werkzeug W exakt auf den Punkt P positionieren. Da jedoch die Roboterachsen nicht vollkommen steif und auch die Gelenke nicht völlig inelastisch sind, wird sich das Roboterwerkzeug W auf dem Punkt P', der vom Punkt P um den Vektor X versetzt ist, einstellen. Um diese Fehlpositionierung zu korrigieren, muß die Robotersteuerung die jeweilige Abweichung X kennen und sich daraus entsprechende Korrekturwerte für die Winkelstellungen der Gelenke G1, G2, G3 berechnen. Diese Fehlpositionierung oder Abweichung X von der eigentlichen Position P wird natürlich nicht im gesamten Arbeitsbereich des Roboters gleich groß sein. Es ist anzunehmen, daß die Abweichung umso größer ist, je weiter der Roboter auskragt und je großer die Werkzeuglast ist.

Zur Vermessung der Abweichungen kann beispielsweise ein hochgenaues Lasermeßsystem verwendet werden das es ermöglicht, die gesamte sechsdimensionale Position des Roboters zu vermessen. Selbstverständlich kann auch lediglich die Punktgenauigkeit des Roboters ohne Berücksichtigung der Werkzeugrichtung $\underline{R}$ vermessen werden,

falls keine höheren Anforderungen an die Genauigkeit gestellt werden.

Der Meßstrahl LM eines solchen Lasermeßsystems ist in FIG 1 gestrichelt angedeutet. Als Vermessungskriterium läßt sich beispielsweise voraussetzen, daß die Fehlposition P' immer dann erfaßt wird, wenn die Abweichung X von einzelnen Meßpunkten P0...P4 beispielsweise einem Zentimeter entspricht (Diese Maßangabe ist willkürlich gewählt und soll lediglich der besseren Anschaulichkeit dienen). In diesem Fall kann der Meßstrahl LM des Lasermeßsystems exakt einen Zentimeter unterhalb der Ebene E1 mit den Meßpunkten P0 bis P4 fest eingerichtet werden.

Bei der Vermessung muß zunächst ein Punkt gefunden werden, an dem die Abweichung des Roboterwerkzeugs W genau einem Zentimeter entspricht. Angenommen dieser Punkt sei der Punkt P0 in der Ebene E1. Das Roboterwerkzeug W wird dann durch Handeinstellung oder entsprechende Steuervorgabe exakt auf den Punkt P0 positioniert, worauf ihm von der Steuerung vorgegeben wird sein Werkzeug in radialer Richtung in der Ebene E1 nach außen zu verfahren. Aus den erwähnten Gründen, wird die Position des Werkzeugs W jedoch von der Ebene E1 abweichen und in einem Abstand vom Punkt P0 auf den Meßstrahl LM des Lasermeßsystems treffen. An dieser Stelle wird die Position des Roboterwerkzeugs vom Lasermeßsystem erfaßt, mit der von der Robotersteuerung berechneten Soll-Position P1 verglichen und daraus die Abweichung X berechnet. Das Roboterwerkzeug W wird jetzt wieder von Hand oder durch entsprechende Vorgabe an die Robotersteuerung exakt auf den Punkt P1 geführt und der Vorgang beginnt aufs Neue. Es ist leicht vorstellbar, daß die Fehlpositionierung des Roboterwerkzeugs W umso größer wird, je weiter der Roboterarm ausragt. Deshalb wird der Abstand der Meßpunkt P0 bis P4 mit zunehmenden Radius geringer.

Wegen der Rotationssymmetrie brauchen die Abweichungen X nur auf einer jeweiligen Halbgeraden einer jeweiligen Ebene E0, E1, E2 vermessen werden. Alle weiteren Abweichungen lassen sich dann durch einfache Interpolation zwischen den vermessenen Positionen bestimmen. Dies kann im einfachsten Fall dadurch geschehen, daß ausgehend von der Soll-Position P des vorhergehenden Punktes P0...P4 zur Ist-Position P' des nachfolgenden Punktes eine Gerade gelegt wird. Damit lassen sich die Abweichungen X von den Soll-Positionen aller zwischen den beiden Meßpunkten, beispielsweise zwischen den Punkten P0 und P1 oder P1 und P2 usw., liegenden Punkte beispielsweise über den Strahlensatz oder über einfache trigonometrische Beziehungen ermitteln. Auf diese Weise können alle Abweichungen eines jeden beliebigen Punktes in einer Ebene E1, E2, E3 ermittelt werden.

Um die Abweichungen aller Raumpunkte bestimmen zu können, wird der Arbeitsbereich des Roboters in mehrere Ebenen E0, E1, E2 eingeteilt, wobei die Abweichungen aller Punkte einer weiteren Ebene auf die gleiche Weise wie oben beschrieben ermittelt werden.

Der Abstand von einer jeweils vorangehenden Ebene, im Beispiel der Abstand auf die Z-Achse, kann dabei wie folgt ermittelt werden. Dem Roboter wird wieder die Soll-Position P0 vorgegeben. Von dieser Soll-Position war als Abweichung $\underline{X}$ ein Zentimeter angegeben. Jetzt läßt man den Roboter in kleinen Schritten weitere Soll-Positionen senkrecht zum Punkt P0 anfahren. An jeder dieser angefahrenen Positionen wird mit dem Lasermeßsystem die Abweichung zwischen Soll- und Ist-Position vermessen. Erst dann, wenn die Abweichung $\underline{X}$ zwischen Soll- P und Ist-Position $P'$ an einem jeweiligen Punkt auf der senkrechten Geraden, verglichen mit der Abweichung $\underline{X}$ von der Soll-Position am Punkt P0 einen vorgegebenen Wert annimmt, ist es zweckmäßig, Positionsfehlermessungen in der Ebene, die der Soll-Position des Werkzeugs entspricht durchzuführen.

Je nach erforderlicher Genauigkeit wird der Abstand der Ebenen E0, E1, E2 voneinander unterschiedlich sein. Beispielsweise könnte es ausreichend sein, erst dann Meßpunkte in einer benachbarten Ebene zu vermessen, wenn die Differenz der Abweichung zwischen dem Punkt P0 und einem senkrecht dazu gelegenen Punkt zwei Millimeter beträgt. Es ist offensichtlich, daß dieser Wert je nach Genauigkeitsanforderungen und Arbeitsbedingungen des Roboters unterschiedlich sein wird.

Mit den bekannten Abweichungen von den Soll-Positionen P0 bis P4 in der Ebene E1 und den Abweichungen an den Soll-Positonen der Ebenen E0 und E2, die sich in senkrechtem Abstand zu den Soll-Positionen P0 bis P4 der Ebene E1 befinden, lassen sich ebenfalls alle Abweichungen die auf der senkrechten Verbindungsgeraden der Soll-Positionen liegen, interpolatorisch ermitteln.

Damit ist für den ganzen halbkugelförmigen Raum nur die Bestimmung der Meßpunkte P0 bis P4 in der Ebene E1 und der weiteren Meßpunkte in den Ebenen E0 und E2 erforderlich, um die Abweichungen im gesamten Raum der von der Halbkugelschale umschlossen wird, zu ermitteln.

Die gemessenen Abweichungen $\underline{X}$ von den Soll-Positionen werden dazu in einem Speichermedium als Positionsfehler-Raummatrix abgelegt. Der jeweiligen Robotersteuerung werden die entsprechenden Interpolationsprogramme und die Symmetriebedingungen der Meßpunkte vorgegeben. Dies kann sowohl in einem Offline-Programmiergerät eines Roboters als auch unmittelbar in der Robotersteuerung realisiert werden

Im ersten Fall werden dann bei der Programmierung des Roboters in Abhängigkeit von der Länge des Roboterarms und der programmierten Last die jeweiligen interpolierten Abweichungen so in das Robotersteuerungsprogramm eingerechnet, daß typ- und lastzeitspezifisch verzerrte Programme für jeden Robotertyp entstehen, die bei der Abarbeitung durch den realen Roboter zu den gewünschten Soll-Positionierergebnissen führen. In diesem Fall erfordert jede Änderung des Bewegungsablaufs oder der Last einen erneuten Programmiervorgang.

Im zweiten Fall wird die Positionsfehler-Raummatrix in der Robotersteuerung hinterlegt. Hierdurch ist es möglich, im Online-Betrieb kartesisch vorgegebene Soll-Positionen unter Berücksichtigung der aktuellen Lastverhältnisse entsprechend der hinterlegten Stützpunktfehler-Raummatrix interpolatorisch so zu verzerren, daß die angefahrenen Positionen den Soll-Positionen weitestgehend entsprechen.

Die aktuellen Lastverhältnisse sind in der Regel programmtechnisch zu hinterlegen oder durch eine einfache Sensorik online zu ermitteln.

## Ansprüche

1. Verfahren zur Bahn- und Positionskorrektur eines Werkzeugs eines Roboters, wobei die Soll-Position des Werkzeugs im Arbeitsbereich des Roboters in einem Bezugskoordinatensystem angebbar ist und wobei für eine jeweils vorgebbare Soll-Position des Werkzeugs entsprechende Winkelstellungen der Robotergelenke von einer Robotersteuerung berechnet und eingestellt werden, **gekennzeichnet** durch folgende Verfahrensschritte:

a) Während einer Einmeßphase wird die jeweilige Ist-Position ($P'$) des Werkzeugs (W) bezüglich vorbestimmter Meßpunkte (P0...P4), die der Robotersteuerung als Soll-Positionen vorgebbar sind, innerhalb des Arbeitsbereichs des Roboters vermessen und die jeweilige Abweichung ($\underline{X}$) zwischen Ist- ($P'$) und Soll-Position (P) wird als Element einer Positionsfehler-Raummatrix in einem Speichermedium hinterlegt, wobei lediglich so viele Meßpunkte (P0...P4) gesetzt werden wie notwendig sind um die Positionsfehler-Raummatrix unter Ausnutzung der Symmetrieeigenschaften eines jeweiligen Bezugskoordinatensystems zu bilden,

b) die Abweichungen ($\underline{X}$) zwischen Ist- ($P'$) und Soll-Position (P) an den vorbestimmten Meßpunkten (P0...P4) werden zur Interpolation der Abweichungen ($\underline{X}$) aller zwischen den Meßpunkten (P0...P4) liegenden Werkzeugpositionen herangezogen,

c) aus den Abweichungen ($\underline{X}$) werden jeweils Korrekturwerte für die Winkelstellungen der Robotergelenke (G1,G2,G3) berechnet und zur Positionskorrektur des Werkzeugs (W) herangezogen.

2. Verfahren nach Anspruch 1, **dadurch gekennzeichnet,** daß die jeweilige Ist-Position (P′) des Werkzeugs (W) in mehreren zur Rotationsachse (Z) des Roboters rechtwinkligen Ebenen (E0,E1,E2) bezüglich vorgebbarer Meßpunkte (P0...P4) vermessen wird, wobei die vorgebbaren Meßpunkte (P0...P4) auf einer Geraden einer jeweiligen Ebene (E0,E1,E2) liegen die durch die Rotationsachse (Z) und einen vorgebbaren Abstand des Werkzeugs (W) von der Rotationsachse (Z) gebildet wird, wobei alle übrigen Meßpunkte (P0...P4) einer jeweiligen Ebene (E0,E1,E2) unter Ausnutzung der Rotationssymmetrie bestimmt werden.

3. Verfahren nach Anspruch 2, **dadurch gekennzeichnet,** daß die Meßpunkte (P0...P4) auf einer Geraden einer jeweiligen Ebene (E0,E1,E2) so gesetzt werden, daß die Abweichung (X) von der Soll- (P) zur Ist-Position (P′) jedes Meßpunktes (P0...P4) gleich groß ist.

4. Verfahren nach Anspruch 2 oder 3, **dadurch gekennzeichnet,** daß der Abstand benachbarter Ebenen (E0,E1,E2) so gewählt wird, daß die Differenz der Abweichungen (X) zwischen den Ist- (P′) und Soll-Positionen (P) in einer Ebene (E0,E1,E2) und den Abweichungen (X) zwischen den Ist- (P′) und Soll-Positionen (P) einer benachbarten Ebene (E0,E1,E2) vorgebbare Werte einnehmen.

5. Verfahren nach einem der vorstehenden Ansprüche, **dadurch gekennzeichnet,** daß die Abweichungen zwischen Ist- (P′) und Soll-Position (P) an den vorbestimmten (X) Meßpunkten (P0...P4) unter verschiedenen Arbeitslasten des Roboters vermessen werden.

6. Verfahren nach Anspruch 5, **dadurch gekennzeichnet,** daß aus den unter den verschiedenen Arbeitslasten des Roboters erhaltenen Abweichungen (X) eine allgemeine Lastabhängigkeit der Meßpunkte (P0...P4) interpoliert wird.

7. Verfahren nach einem der vorstehenden Ansprüche, **dadurch gekennzeichnet,** daß die lastabhängigen Abweichungen (X) an den vorbestimmten Meßpunkten (P0...P4) in einem Offline-Programmiergerät für die Robotersteuerung hinterlegbar sind und bei der Berechnung der Winkelstellungen der Robotergelenke (G1,G2,G3) für ein jeweils vorgegebenes Steuerprogramm fehlerkompensierend berücksichtigt werden.

8. Verfahren nach einem der Ansprüche 1 bis 4, **dadurch gekennzeichnet,** daß die Abweichungen (X) an den vorbestimmten Meßpunkten (P0...P4) in der jeweiligen Robotersteuerung hinterlegbar sind und im Online-Betrieb bei der Abarbeitung jedes Steuerprogramms zur fehlerkompensierenden Berechnung der Winkelstellungen der Robotergelenke (G1,G2,G3) herangezogen werden.

8 P 3334

FIG 1

FIG 2